# EUROPEAN PATENT APPLICATION

(11) **EP 2 985 887 A1**
(43) Date of publication of application: **17.02.2016**
(21) Application number: 14180957.4
(22) Date of filing: 14.08.2014
(51) Int. Cl.: H02K 3/50

(54) **A generator end winding support**

(71) Applicant: Alstom Technology Ltd., 5400 Baden (CH)
(72) Inventor: Scherf, Gunter, 5242 Birr (CH); Arend, Peter Ullrich, 5623 Boswil (CH)
(74) Representative: General Electric Technology GmbH

(57) **Abstract**

The present disclosure relates to a generator end winding support for supporting an end part of a winding of an electric machine. Described is a generator end winding support with a support for an end winding engaging the end winding as part of the winding of an electric machine, whereby the winding is housed in a core sheet, whereby the support for an end winding comprises at least one support ring fixed to the support for end winding, from which at least one support ring a part of the volume is removed.

## Description

### TECHNICAL FIELD

The present disclosure relates to a generator end winding support for supporting an end part of a winding of an electric machine.

The electric machine is in particular a rotating electric machine such as a synchronous generator to be connected to a gas or steam turbine (turbogenerator) or a synchronous generator to be connected to a hydro turbine (hydro generator) or an asynchronous generator or a synchronous or asynchronous electric motor or also other types of electric machines.

### BACKGROUND

Electrically conductive windings are composed to electric coils in electric machines. These coils or windings are made from copper usually. The windings are placed in slots in the core sheets of the rotor or stator of the electric machine. The end pieces of the windings protrude over the slots and are in the case of high energy generators bent in relation to the main winding part housed in the slot. Here, especially the end windings of a stator of an electric machine are considered. The end pieces of the windings, in the following referred to as end windings, have a support which carries, stiffens and also strengthens the complete end winding structure, which consists of the stator end winding itself and its support structure, both protruding from the core sheet of the stator. It was discovered that in operation such end winding structures can vibrate on a harmful level, which can seriously endanger the mechanical integrity. Such harmful vibration levels are often due to resonance phenomena, which are characterised by a natural frequency of the stator end winding structure that is close to one of the excitation frequencies during operation. A usual counter-measure is a detuning of the stator end winding structure. This means typically a change of the support structure of the end winding in such a way, that the natural frequency is shifted away from the excitation frequency of concern.

### SUMMARY

It is an object of the invention to avoid damages to a stator or rotor of an electric machine. This object is solved with the features of a generator end winding support and the use of support rings according to the independent claims.

Further examples of the invention are described in the dependent claims.

### BRIEF DESCRIPTION OF THE DRAWINGS

Further characteristics and advantages will be more apparent from the description of a preferred but non-exclusive embodiment of the generator end winding support illustrated by way of non-limiting example in the accompanying drawings, in which:
- Fig. 1: is a schematic side view of a cross-section of a part of a winding housed in a slot at the right, an end winding protruded from the winding at the left, a support for an end winding, with three support rings at the support with no part of the volume of the three support rings removed;
- Fig. 2: is a schematic side view similar to Fig. 1 with three support rings at the support and some parts of the volume in the inside of the three support rings removed to change the natural frequency of the end windings and attached support;
- Fig. 3: is a curve showing the dependency of the stiffness k of one of the support rings and the mass m of one of the support rings from the percentage of hollow profile in the cross-section of the support ring;
- Fig. 4: is a curve showing the percentage of hollow profiles at the support rings starting from a solid support ring against the frequency change of the natural frequency from -6 Hz to +5 Hz.

### DETAILED DESCRIPTION OF EXEMPLARY EMBODIMENTS

With reference to the figures, these show schematic side views of a cross-section of an end winding with attached support, wherein like reference numerals designate identical or corresponding parts throughout the several views.

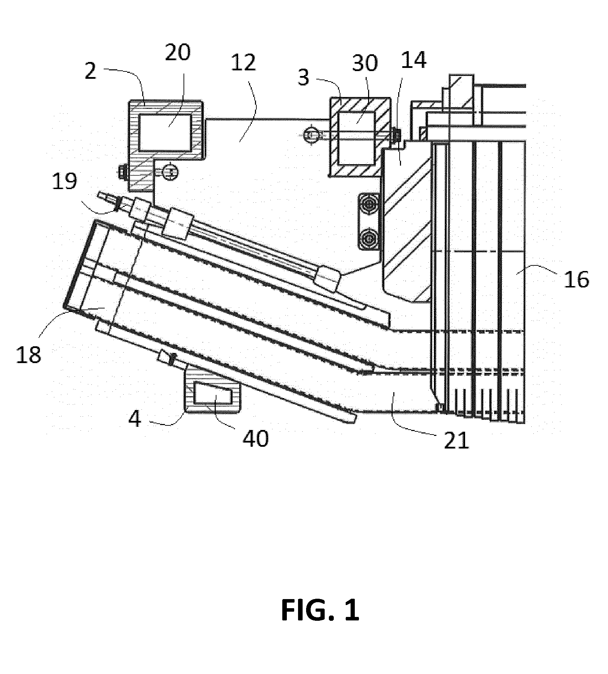

Fig. 1 shows a schematic side view of a cross-section of a part of a winding 21 housed in a slot at the right lower side. The slot is one slot of several slots manufactured in a stack of laminated sheets, commonly denominated as sheet core 16. The sheet core 16 with the slots constitutes the essential parts of a stator of an electric machine. In high power generators the winding 21 usually has a length of several metres finished with an end winding part or end winding 18 which protrudes from the winding 21 at the left in the view of Fig. 1. A support for an end winding 12 is attached to the end winding 18. The support 12 is attached to the sheet core 16 via a pressing plate 14 along parts of the end of the sheet core 16. A clamping system 19 projects through the support 12 essentially in parallel to the end winding 18. The clamping system 19 comprises a bar which is clamped to exert a directed mechanical force to the system. The clamping system 19 is connected to the support for an end winding 12 and with the end winding 18. The main function of the clamping system 19 is to stabilize and hold the end winding 18 in an aligned position. A first support ring 2 is fixed to the support 12 at the left upper edge of the support 12 by means of screws projecting through the first support ring 2 and the support 12. A second support ring 3 is fixed to the support 12 at the upper opposite edge of the support 12 by means of screws projecting through the second support ring 3 and the support 12. The third support ring 4 encompasses a part of the end winding 18 and engages to the end winding 18 with an angle. The first, second, and third support ring 2, 3, 4 can be made from steel or from a composite material. In operation the stator, the stator end winding 18, and the attached parts are exposed to high forces and vibrations. The system shown, the end winding 18, has specific natural frequencies. When at least one of the specific natural frequencies of all excitable vibration modes is equal or close to one of the excitation frequencies, the vibration amplitude can rise up to harmful levels. A possible counter-measure is the modification of the support rings 2, 3, 4 in order to tune the natural frequency upwards or downwards. In Fig. 1 the volume of the three support rings 2, 3, 4 is complete. Here, the natural frequency of the system is unchanged.

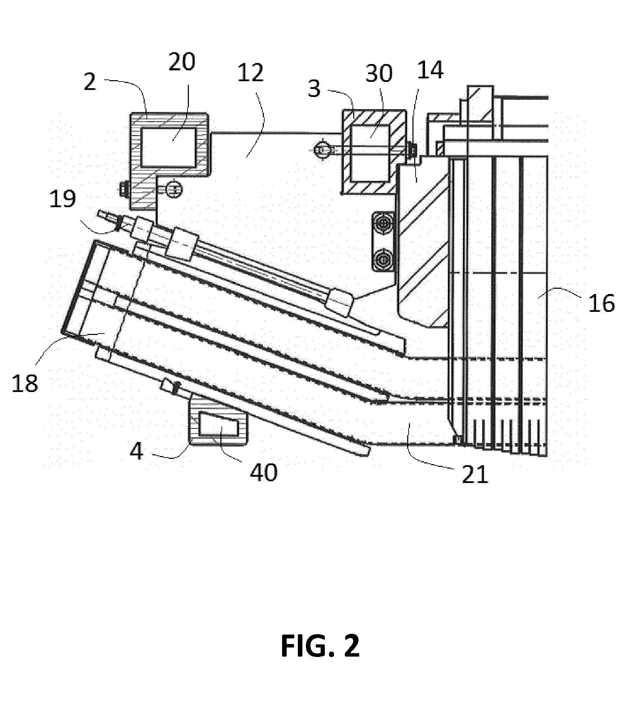

Fig. 2 shows a schematic side view similar to Fig. 1, whereby the structure of the part of a winding 21 shown housed in a slot at the right and the further features described above are the same. In the contrary to Fig. 1 under Fig. 2 the three support rings 2, 3, 4 are changed. As can be seen in the cross-section of Fig. 2 in this example a part of the volume of the three support rings 2, 3, 4 is removed. In this example a volume in the inside of the three support rings 2, 3, 4 is removed compared to a full massive support ring leading to a hollow profile 20, 30, 40, respectively. With other words the three support rings 2, 3, 4 are hollow with a variable wall thickness. In further examples also only one or two of the three support rings 2, 3, 4 can be designed with a removed volume. The extent to which the volume is changed and which wall thickness is established depends on the specific natural frequency properties of the system comprising the support rings 2, 3, 4. In detail, the natural frequency of the stator end winding 18 together with the end winding support 1 is of interest, referred to here also as system. The natural frequency of the system shown in the Figs and denominated as end winding support 1 is changed by replacing massive support rings 2, 3, 4 with hollow support rings 2, 3, 4 as shown in Fig. 2. Notably, the natural frequency of the end winding support 1 with the stator end winding 18 is increased herewith. In common systems the stiffness *k* is increased to weaken the problem of vibrations. The natural frequency of concern is typically shifted upwards by increasing the structural stiffness, because this is also strengthening the structure. By these measures to increase stiffnes*s k* also mass *m* must be added to the system leading to more costs and load on the end winding support 1. Moreover, the mass is acting as inertia and can significantly diminish the stiffening effect of a support ring 2, 3, 4. In some situations in operation, the support ring can have a predominant inertia effect on the end winding structure and reduces the natural frequency. The detuning effect of a support ring 2, 3, 4 can be different. The established frequency shift can have a different amount and can be positive, i.e. a frequency shift upwards, or negative, i.e. a frequency shift downwards. The tuning effect of a support ring 2, 3, 4 depends from the overall design of the stator end winding structure, use of materials, manufacturing aspects and actual vibration mode, which is of concern.

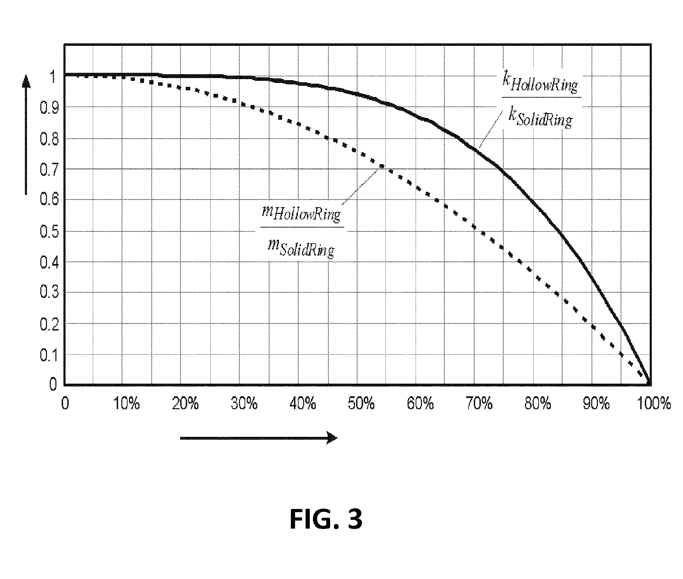

Fig. 3 shows the dependency of the stiffness *k* of one of the support rings 2, 3, 4 and the mass m of one of the support rings 2, 3, 4 from the percentage of hollow profile 20, 30, 40 in the cross-section of the support ring 2, 3, 4. Shown on the vertical axis is the relation of mass m and stiffness k, shown on the horizontal axis is the percentage of hollow profile 20, 30, 40 at the support rings 2, 3, 4 starting from a solid support ring 2, 3, 4 at zero to no support ring at 100%. The upper solid curve illustrates the stiffness *k* of a hollow profile 20, 30, 40 in relation to the stiffness *k* of a solid support ring 2, 3, 4. The lower dashed curve illustrates the mass *m* of a hollow profile 20, 30, 40 in relation to the mass *m* of a solid support ring 2, 3, 4. The stiffness *k* and the mass *m* decrease with the hollow-size at the support ring 2, 3, 4, the more mass m is removed from the hollow profile 20, 30, 40 the more the stiffness *k* is reduced. Nevertheless, the mass *m* decreases to a higher extend than the stiffness k, which is noteworthy.

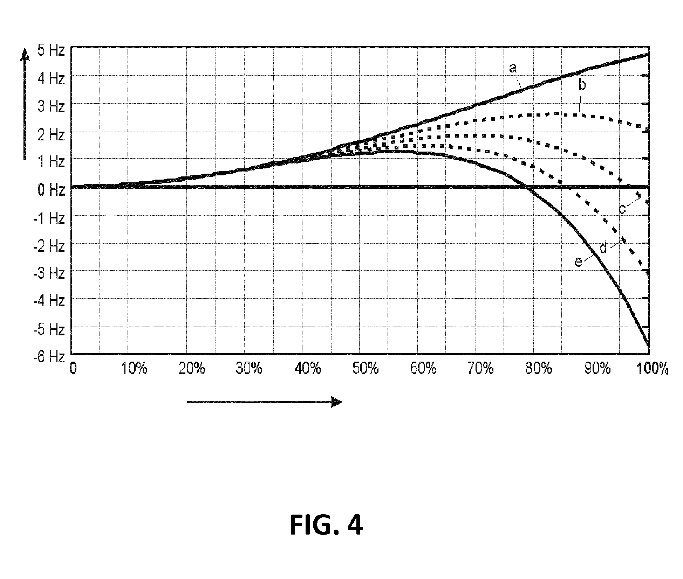

Fig. 4 shows a set of five calculated diagrams marked with a-e, which illustrate the possibility for detuning the natural frequency with a hollow profile 20, 30, 40 for different exemplary tuning situations. The horizontal axis shows the percentage of hollow areas, i.e. the share of the hollow profile 20, 30, 40, at the support rings 2, 3, 4 starting from a solid support ring 2, 3, 4 at zero. The vertical axis shows the frequency change of the natural frequency of the stator end winding structure, more precisely the end winding support 1 and the end winding 18, from -6 Hz to +5 Hz.

The curves a and b represent the tuning-effect of hollow profiles 20, 30, 40 of support rings 2, 3, 4, which show a predominant inertia effect, i.e. an increase of the natural frequency when applying the hollow profile 20, 30, 40. The curves *c*, *d* and *e* represent the tuning-effect of hollow profiles 20, 30, 40 of support rings 2, 3, 4, which show a predominant stiffening effect, i.e. a decrease of the natural frequency starting from a specific percentage between approximately 60% and 75% when applying the hollow profiles 20, 30, 40.

By using a hollow support ring 2, 3, 4 with a hollow profile 20, 30, 40 instead of a solid support ring 2, 3, 4, typically achievable frequency changes of the natural frequency are in the range of +1 to +5Hz. The multiple application of hollow support rings 2, 3 and 4 significantly increases the possible range of changes of the natural frequency.

While the invention has been described in detail with reference to exemplary embodiments thereof, it will be apparent to one skilled in the art that various changes can be made, and equivalents employed, without departing from the scope of the invention. The foregoing description of the preferred embodiments of the invention has been presented for purposes of illustration and description. It is not intended to be exhaustive or to limit the invention to the precise form disclosed, and modifications and variations are possible in light of the above teachings or may be acquired from practice of the invention. The embodiments were chosen and described in order to explain the principles of the invention and its practical application to enable one skilled in the art to utilize the invention in various embodiments as are suited to the particular use contemplated. It is intended that the scope of the invention be defined by the claims appended hereto, and their equivalents. The entirety of each of the aforementioned documents is incorporated by reference herein.

### REFERENCE NUMBERS

- 1: end winding support
- 2: first support ring
- 3: second support ring
- 4: third support ring
- 12: support or support for end winding
- 14: pressing plate
- 16: stator core sheet or core sheet
- 18: stator end winding or end winding
- 19: clamping system
- 20: first hollow profile
- 21: winding
- 30: second hollow profile
- 40: third hollow profile

## Claims

1. A generator end winding support (1) with a support for an end winding (12) engaging the end winding (18) as part of the winding (21) of an electric machine, whereby the winding (21) is housed in a core sheet (16), whereby the support for an end winding (12) comprises at least one support ring (2, 3, 4) fixed to the support for end winding (12), from which at least one support ring (2, 3, 4) a part of the volume is removed.

2. The generator end winding support (1) according to claim 1, **characterized in that** the removed volume of the at least one support ring (2, 3, 4) is a volume inside the at least one support ring (2, 3, 4) creating a hollow space inside the at least one support ring (2, 3, 4).

3. The generator end winding support (1) according to claim 1, **characterised in that** three support rings (2, 3, 4) with removed volume are provided, a first support ring (2) at one edge of the support for an end winding (12), a second support ring (3) at the opposite edge of the support for an end winding (12), and a third support ring (4) between the first support ring (2) and the second support ring (3).

4. The generator end winding support (1) according to claim 1, **characterised in that** a pressing plate (14) is positioned between the core sheet (16) and the second support ring (3).

5. The generator end winding support (1) according to claim 1, **characterised in that** a clamping system (19) projects along the support for an end winding (12) to hold the support for an end winding (12) in place with regard to the end winding (18) and the core sheet (16).

6. Use of support rings (2, 3, 4) with partly removed volume for a generator end winding support (1) according to claim 1.
